# FASCICULE DE BREVET EUROPEEN

(11) **EP 1 013 504 B1**
(45) Date de publication et mention de la délivrance du brevet: **07.05.2003**
(21) Numéro de dépôt: 98124399.1
(22) Date de dépôt: 22.12.1998
(51) Int. Cl.: B60R 7/10

(54) **Barre porte-cintres à vêtements pour caisse de véhicule automobile**
Tragstange für Kleidungsstücke für Kraftfahrzeugkarosserie
Garment rail for vehicle body structure

(43) Date de publication de la demande: 28.06.2000
(73) Titulaire: Frizzo, Scolastica, 36070 Trissino (Vincenza) (IT)
(72) Inventeur: Marchioro, Massimo, 36070 Trissino (Vicenza) (IT)
(74) Mandataire: Bettello, Pietro, Dott. Ing.

(56) Documents cités:
- EP-A- 0 035 725
- EP-A- 0 495 384
- DE-A- 4 336 623
- GB-A- 2 044 094
- US-A- 4 494 896

## Description

L'invention concerne une barre porte-cintres à vêtements destinée à être accrochée à des trous, ménagés dans les ferrures en tôle appliquées aux surfaces intérieures des parois latérales verticales des caisses de véhicules automobiles destinés au transport de vêtements dans les entreprises commerciales, selon le préambule de la revendication 1. Une telle barre porte-cintres est connue du document EP-A-0 495 384.

Ainsi qu'il est bien connu, le transport des vêtements des entrepôts des industries manufacturières aux magasins de distribution s'effectue généralement par des véhicules automobiles à caisse de fourgon, dans lesquels les vêtements sont emmagasinés, au moyen de cintres porte-vêtements appropriés, sur des barres horizontales munies d'extrémités en forme, qui sont aptes à s'ancrer dans des trous correspondants prévus sur des ferrures appropriées fixées aux parois intérieures des caisses.

Un inconvénient qui se manifeste pendant la phase de transport est constitué par le fait que la tige porte-cintres se décroche de la ferrure correspondante, par suite des secousses du véhicule automobile provoquées par un revêtement routier défoncé ou pour une quelconque autre raison.

Le décrochage de la barre porte-cintres fait tomber sur le fond de la caisse les vêtements suspendus sur cette barre, en entraînant la nécessité de replacer les vêtements dans la bonne position, éventuellement après un repassage ultérieur de ces derniers.

Dans les demandes de modèle d'utilité italien N° VI93U000102 du 09 décembre 1993 et N° VI93U000107 du 30 décembre 1993, on décrit deux formes possibles de réalisation d'une barre porte-cintres équipée d'un élément de tête, convenablement conformé, qui va s'accrocher au trou de serrure de la ferrure fixée sur la paroi de la caisse.

Le but de l'invention est de réaliser une barre porte-cintres qui soit plus économique» du point de vue de la construction, et qui soit plus maniable, sous l'aspect du fonctionnement, que les dispositifs analogues de type connu.

Ceci est obtenu conformément à la partie caractérisante de la revendication 1.

On prévoit que la barre porte-cintres selon l'invention soit munie à ses deux extrémités de crochets qui vont s'ancrer dans des trous présents sur les ferrures soudées aux parois en tôle de la caisse, selon une disposition connue en soi.

Au moins un des deux crochets d'extrémité est muni d'un ressort qui permet l'allongement élastique de la barre pour en adapter la longueur aux dimensions exactes de la caisse du véhicule automobile sur les parois latérales intérieures de laquelle ladite barre est accrochée.

La barre est complétée par la présence d'une tige, tournant sur des tourillons, qui bloque les cintres porte-vêtements sur la barre, selon une disposition également connue en soi.

Une première caractéristique de l'invention concerne la conformation des deux crochets d'extrémité, le profil des trous des ferrures fixes et la modalité résultante de l'accrochage.

Une deuxième caractéristique de l'invention est constituée par l'utilisation d'un chapeau en matière plastique qu'on enfile sur les extrémités de la barre, et qui exerce la fonction de guidage du crochet ainsi que celle de charnière pour la tige de blocage des cintres.

D'autres caractéristiques de l'invention concernent la section de l'élément tubulaire constituant la barre et l'utilisation d'un élément élastique profilé qui assure l'arrêt de la tige de blocage des cintres sur la barre, pendant l'action de transport des vêtements.

D'autres caractéristiques de l'invention seront mieux mises en évidence par la description d'une forme possible de réalisation, donnée à seul titre d'exemple illustratif et non limitatif, à l'aide des planches de dessins annexés où :
la Fig. 1 (planche I) représente une vue longitudinale, et partiellement en coupe, de la barre porte-cintres selon l'invention, montée sur la caisse ;
la Fig. 2 représente une vue en plan, en coupe selon la ligne II-II de la Fig. 1, de la barre porte-cintres ;
la Fig. 3 représente une vue transversale, en coupe selon la ligne III-III de la Fig. 1, de la barre porte-cintres ;

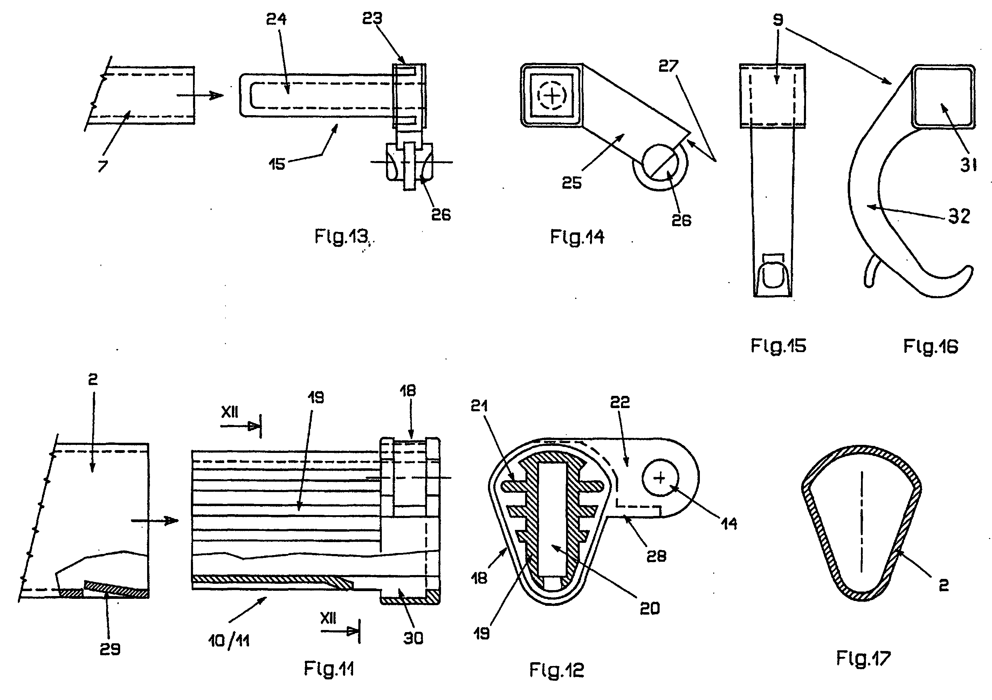

la Fig. 4 représente une vue transversale, en coupe selon la ligne IV-IV de la Fig. 1, de la barre porte-cintres ;
la Fig. 5 (planche II) représente une vue de détail de la zone d'accrochage de la barre porte-cintres à la ferrure ;
la Fig. 6 représente une vue transversale, en coupe selon la ligne VI-VI de la Fig. 5, de l'extrémité de la barre porte-cintres ;
la Fig. 7 représente la même vue transversale de la Fig. 6, avec la tige de blocage des cintres soulevée ;
la Fig. 8 représente une vue transversale de la barre de blocage des cintres munie d'un cintre;
la Fig. 9 représente une vue frontale selon la ligne IX-IX de la Fig. 5, de la paroi munie des ferrures pour l'accrochage de la barre porte-cintres ;
la Fig. 10 représente une vue, en coupe selon la ligne X-X de la Fig. 9, du trou d'accrochage ;
la Fig. 11 (planche III) représente une vue frontale du chapeau d'extrémité de la barre porte-cintres ;
la Fig. 12 représente la vue latérale du chapeau de la Fig. 11 ;
la Fig. 13 représente une vue frontale du levier de support de la tige de blocage de cintres;
la Fig. 14 représente la vue de côté du levier de la Fig. 13;
la Fig. 15 représente une vue avant de l'élément d'accrochage en forme;
la Fig. 16 représenté une vue de côté de l'élément de la Fig. 15;
la Fig. 17 représente la coupe du corps tubulaire de la barre porte-cintres.

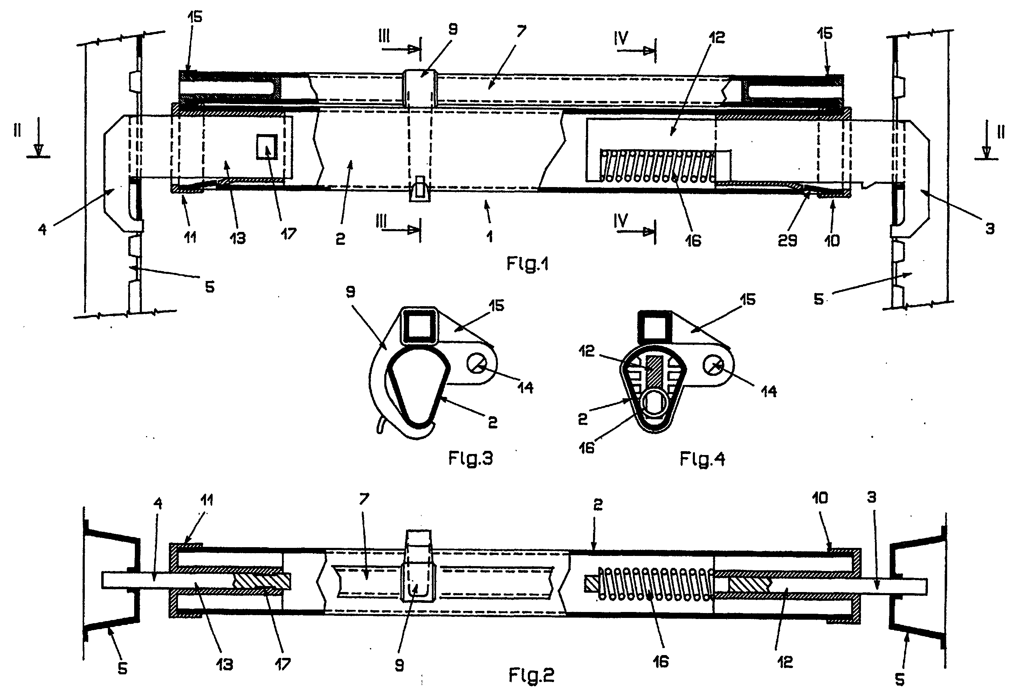

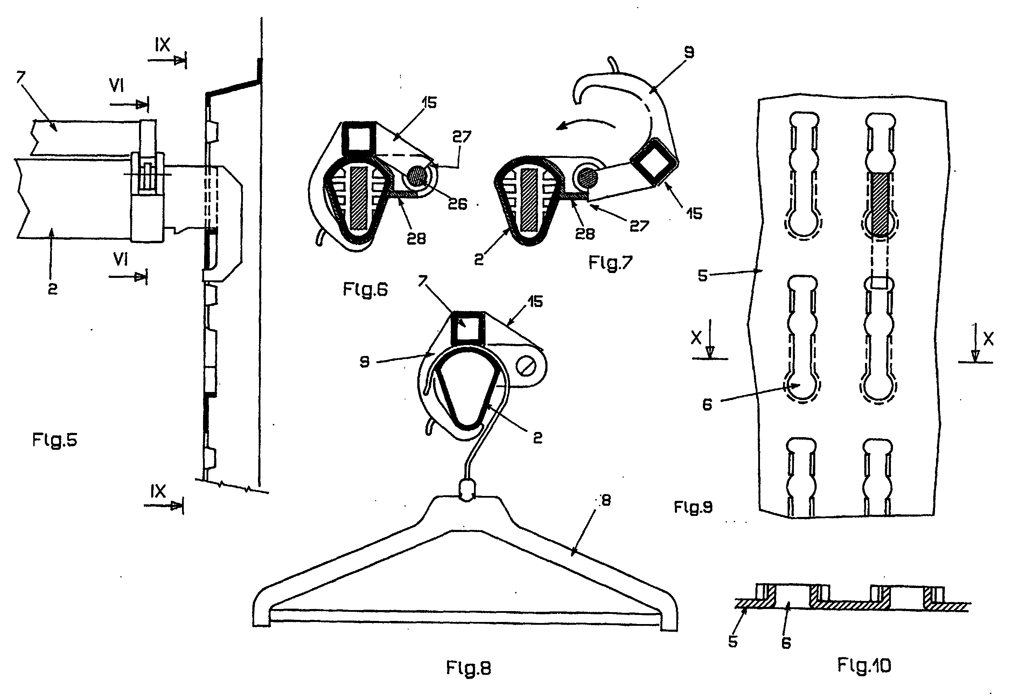

Comme on peut le remarquer sur la Fig. 1, la barre porte-cintres 1 comprend un corps tubulaire 2 muni à ses deux extrémités de crochets 3, 4 qui vont s'ancrer sur les ferrures 5 munies de trous 6, soudées aux parois verticales de la caisse du véhicule automobile de transport des vêtements.

La barre porte-cintres 1 est complétée par la tige tubulaire 7 qui bloque les cintres 8 chargés sur le corps tubulaire 2 et est maintenue en position par l'élément d'ancrage 9 qui s'accroche audit corps tubulaire (voir Fig. 8).

Aux extrémités du corps tubulaire 2, sont enfilés deux chapeaux en matière plastique 10 et 11 qui ont la fonction de retenue et de guidage des queues 12 et 13 dont les crochets 3 et 4 sont munis respectivement, ainsi que celle de pivot de rotation 14 des deux leviers 15 qui supportent la tige 7.

Le crochet 3, qui coulisse longitudinalement pour permettre l'action d'accrochage et pour adapter la longueur de la barre aux dimensions de la caisse, est soumis à l'action antagoniste du ressort 16, inséré dans le logement délimité par la surface intérieure du corps tubulaire 2 et qui agit sur la queue 12 et sur la paroi d'extrémité intérieure du chapeau 10.

Le crochet 4 est au contraire bloqué, par l'encastrement à ailettes 17, réalisé entre la queue 13 et le corps du chapeau 11.

La conformation des crochets 3 et 4 et la disposition des trous 6 permettent de réaliser une opération d'accrochage rapide et sûre.

En effet, comme on le voit sur les Fig. 1, 5 et 9, les trous 6, pratiqués sur les ferrures 5, sont sensiblement des losanges dans lesquels on enfile préalablement le corps du crochet conformé en "C".

L'abaissement ultérieur et un léger mouvement de rentrée amènent le crochet à s'engager sur deux trous consécutifs, en s'appuyant exactement sur le fond d'un trou et sur le sommet du trou sous-jacent, et en réalisant ainsi l'accrochage.

Le trou en losange présente un bord légèrement rentrant (voir Fig. 10), ce qui permet d'obtenir une plus grande robustesse de la ferrure et un guidage pour le corps du crochet, et il a un profil comportant trois portions circulaires ; la portion supérieure facilite l'insertion de l'extrémité du crochet, la portion inférieure assure un appui de ce dernier et la portion centrale permet l'introduction d'embouts d'amarrage en "T" de type connu.

Les chapeaux d'extrémité 10, 11, en matière plastique, sont constitués d'une chemise extérieure 18 et d'une queue 19 où vient s'enfiler l'élément tubulaire 2 (voir Fig. 11, 12).

La queue 19 est munie du trou central 20 servant pour le guidage du crochet respectif et des ailettes 21 de centrage de l'élément tubulaire.

Sur la surface de la chemise font saillie deux pattes 22 qui vont constituer le composant femelle de la liaison à charnière avec le levier correspondant 15 de support de la tige de blocage des cintres.

Les deux leviers d'extrémité 15, en matière plastique et symétriques, sont constitués par une chemise extérieure 23 munie d'une queue 24 où vient s'enfiler la tige tubulaire 7 (voir Fig. 13, 14).

Sur la surface de la chemise fait saillie le bras 15 qui porte à son extrémité le tourillon aminci 26 pour faciliter le montage à charnière entre les pattes 22 précitées.

Il est avantageusement prévu que le levier 15, en position d'ouverture (voir Fig. 7) s'arrête dans une position optimale par l'appui de la surface 27 du bras 25 contre la butée 28 prévue sur le corps du chapeau.

L'élément 9, qui coulisse sur la tige 7, est constitué par un moyeu 31 muni d'un doigt 32 qui a un profil sensiblement identique à celui du corps tubulaire 2.

Ceci a pour effet que, lors de la fermeture de la tige 7, le doigt 32 vient s'ancrer à l'extrémité du corps tubulaire en réalisant le blocage voulu de ladite tige sur ledit corps (voir Fig. 6-8).

Il est en outre prévu que la section du corps tubulaire 2 (voir Fig. 17) se présente globalement en forme de triangle renversé dont la base, ou côté inférieur, et le sommet opposé à cette base sont courbes.

Cette forme s'est révélée la plus avantageuse parmi toutes les formes de réalisation possibles, qui varient entre la forme circulaire et le quadrilatère, parce qu'elle assure la portée maximum avec l'encombrement minimum.

Finalement, pour éviter le risque de voir les deux chapeaux latéraux 10 et 11 se dégager du corps tubulaire 2 après leur assemblage mutuel, on a prévu la présence de deux ressauts ou épaulements intérieurs 29 formés sur ledit corps, qui entrent dans la cavité 30, présente sur chacun des chapeaux précités (voir Fig. 1 et 11).

Les avantages qu'on obtient avec la barre porte-cintres selon l'invention ressortent clairement de ce qui précède.

En particulier, il est prévu un nombre limité de composants, qui sont d'une construction simple et d'un assemblage facile et rapide, et un système d'accrochage rapide et sûr, ce qui permet de résoudre le problème du transport des vêtements au moyen de caisses prévues sur des véhicules automobiles.

## Revendications

1. Barre porte-cintres (1) à vêtements pour caisse de véhicule automobile, destinée à être accrochée par ses extrémités dans des trous (6) prévus sur des ferrures (5) fixées aux surfaces intérieures des parois verticales des caisses des véhicules automobiles de transport, et munie d'une tige tubulaire (7) de blocage de cintres porte-vêtements (8), la barre porte-cintres comprenant un corps tubulaire (2) qui présente à ses extrémités des crochets (3, 4) en forme de "C", opposés l'un par rapport à l'autre, chaque crochet (3, 4) possédant une queue (12, 13) pénétrant dans le corps tubulaire (2), au moins un (3) des crochets (3, 4) coulissant longitudinalement par rapport au corps (2) pour permettre l'action d'accrochage et pour adapter la longueur de la barre aux dimensions de la caisse, **caractérisée en outre par le fait qu'**aux deux extrémités dudit corps tubulaire (2) sont enfilés deux chapeaux (10, 11) assemblés audit corps tubulaire, réalisés en matière plastique et servant à la retenue et au guidage des queues (12, 13) des crochets (3, 4), les deux chapeaux (10, 11) formant pivot de rotation (14) pour des leviers (15) qui supportent ladite tige tubulaire (7) de blocage de cintres porte-vêtements (8).

2. Barre porte-cintres à vêtements selon la revendication 1, **caractérisée par le fait que** le crochet coulissant (3) est en prise avec un ressort antagoniste (16) placé de façon amovible dans le volume intérieur du corps tubulaire (2) et qui agit sur la queue (12) dudit crochet coulissant (3) et sur une paroi d'extrémité intérieure du chapeau correspondant (10).

3. Barre porte-cintres à vêtements, selon l'une des revendications précédentes, **caractérisée par le fait que** le crochet fixe (4) est bloqué par l'encastrement à ailettes (17) réalisé entre la queue correspondante (13) et le corps du chapeau correspondant (11).

4. Barre porte-cintres à vêtements, selon l'une des revendications précédentes, **caractérisée par le fait que** les chapeaux d'extrémité (10, 11) sont maintenus dans le corps tubulaire (2) par au moins un épaulement intérieur (29) formé sur le corps tubulaire (3), qui pénètre dans un évidement correspondant (30) prévu sur chaque chapeau.

5. Barre porte-cintres à vêtements, selon une ou plusieurs des revendications précédentes, **caractérisée par le fait que** les crochets (3, 4) sont adaptés pour être enfilés dans des trous (6), conformés sensiblement en losange et à bords légèrement rentrants.

6. Barre porte-cintres à vêtements selon la revendication 5, **caractérisée par le fait que**, lorsque l'accrochage est réalisé, chaque crochet (3, 4) est en prise avec deux trous (6) consécutifs, en s'appuyant sur le fond d'un premier trou et sur la paroi supérieure du trou sous-jacent.

7. Barre porte-cintres à vêtements selon la revendication 5, **caractérisée par le fait que** les trous (6) présentent au moins une ouverture partiellement circulaire.

8. Barre porte-cintres à vêtements selon une ou plusieurs des revendications précédentes, **caractérisée par le fait que** la section du corps tubulaire (2) est sensiblement un triangle isocèle renversé à sommet arrondi et à base convenablement incurvée.

9. Barre porte-cintres à vêtements selon une ou plusieurs des revendications précédentes, **caractérisée par le fait que**, sur la tige tubulaire (7) de blocage des cintres porte-vêtements (8) est enfilé, de façon coulissante, un élément d'ancrage (9) qui s'ancre au corps tubulaire (2) dans la position de fermeture de ladite tige.

10. Barre porte-cintres à vêtements selon une ou plusieurs des revendications précédentes, **caractérisée par le fait que** chaque chapeau d'extrémité (10, 11) comprend une chemise d'extrémité (18) et une queue (19) d'emboîtement dans le corps tubulaire (2), ladite queue étant munie d'un trou central (20) de guidage du crochet respectif et étant munie extérieurement d'ailettes (21) de centrage dudit corps tubulaire, et comprend en outre deux pattes (22) constituant le composant femelle de la liaison à charnière avec la tige (7) de blocage des cintres et faisant saillie latéralement à partir de ladite chemise d'extrémité (18).

11. Barre porte-cintres à vêtements selon une ou plusieurs des revendications précédentes, **caractérisée par le fait que** chaque levier d'extrémité (15) prévu pour le support de la tige tubulaire (7) comprend une chemise d'extrémité (23) et une queue (24) d'emboîtement de ladite tige, cependant qu'un bras (25) fait saillie latéralement par rapport à ladite chemise d'extrémité (23), ce bras (25) étant muni, à son extrémité opposée à la chemise (23), d'un tourillon aminci (26) qui s'accouple avec les pattes (22) d'un chapeau correspondant pour réaliser la charnière de rotation de ladite tige.

12. Barre porte-cintres à vêtements selon une ou plusieurs des revendications précédentes, **caractérisée par le fait que** l'élément d'ancrage (9) sur la tige (7) de blocage des cintres comprend un moyeu (31) muni d'un doigt (32) ayant un profil en forme de crochet adapté pour se déformer légèrement en venant s'ancrer sur le corps tubulaire (2), dans la position de fermeture de ladite tige.

13. Barre porte-cintres à vêtements selon une ou plusieurs des revendications précédentes, **caractérisée en ce que**, en position d'ouverture maximale de la tige (7), une surface d'arrêt (27) du bras (25) dudit levier (15) vient en appui contre une butée (28) formée sur le corps du chapeau correspondant.

## Patentansprüche

1. Tragstange (1) für Kleidungsstücke für eine Kraftfahrzeugkarosserie zum Einhängen ihrer Enden in Löcher (6), die in Beschlägen (5) vorgesehen sind, welche an den Innenflächen der vertikalen Seiten von Transport-Kraftfahrzeug-Karosserien befestigt und mit einem Rohrgestänge (7) zur Klemmverriegelung von Kleiderbügeln (8) versehen sind, wobei die Kleiderbügel-Tragstange ein Rohrgehäuse (2) umfasst, welches an seinen Enden einander gegenüberliegende C-förmige Haken (3, 4) aufweist, wobei jeder Haken (3, 4) ein Endstück (12, 13) besitzt, welches in das Rohrgehäuse (2) eindringt, wobei wenigstens einer (3) der Haken (3, 4) in Bezug auf das Rohrgehäuse in Längsrichtung gleitet, um das Einhängen zu ermöglichen und zum Anpassen der Länge der Stange an die Dimensionen der Karosserie, außerdem **dadurch gekennzeichnet, dass** an beiden Enden des Rohrgehäuses (2) zwei aus Kunststoff bestehende Kappen (10, 11) auf das Rohrgehäuse aufgesetzt sind, welche zum Festhalten und zur Führung der Endstücke (12, 13) der Haken (3, 4) dienen, wobei die beiden Kappen (10, 11) einen Angelpunkt (14) für Hebel (15) bilden, welche das Rohrgestänge (7) zur Verriegelung der Tragstange für Kleidungsstücke (8) tragen.

2. Tragstange für Kleidungsstücke nach Anspruch 1, **dadurch gekennzeichnet, dass** sich der Gleithaken (3) mit einer Ausgleichsfeder (16) im Eingriff befindet, welche herausziehbar im Inneren des Rohrgehäuses angeordnet ist und auf das Endstück (12) des Gleithakens (3) und eine innere Endwandung der entsprechenden Kappe (10) einwirkt.

3. Tragstange für Kleidungsstücke nach einem der vorhergehenden Ansprüche, **dadurch gekennzeichnet, dass** der feste Haken (4) durch Einbau von Stegen (17) blockiert ist, welche zwischen dem entsprechenden Endstück (13) und dem entsprechenden Korpus der Kappe (11) angeordnet sind.

4. Tragstange für Kleidungsstücke nach einem der vorhergehenden Ansprüche, **dadurch gekennzeichnet, dass** die Endkappen (10, 11) in dem Rohrgehäuse (2) durch mindestens einen auf dem Rohrgehäuse (2) gebildeten inneren Ansatz (29) gehalten werden, welcher in eine entsprechende, in jeder Kappe befindliche Aussparung (30) eingreift.

5. Tragstange für Kleidungsstücke nach einem oder mehreren der vorhergehenden Ansprüche, **dadurch gekennzeichnet, dass** die Haken (3, 4) so ausgebildet sind, dass sie in rautenförmige Löcher (6) mit leicht zurückspringenden Rändern eingeführt werden können.

6. Tragstange für Kleidungsstücke nach Anspruch 5, **dadurch gekennzeichnet, dass** sich nach erfolgter Einhängung jeder Haken (3, 4) mit zwei aufeinanderfolgenden Löchern (6) im Eingriff befindet, indem er sich auf dem Boden eines ersten Loches und auf der oberen Wandung des darunter liegenden Loches abstützt.

7. Tragstange für Kleidungsstücke nach Anspruch 5, **dadurch gekennzeichnet, dass** die Löcher (6) wenigstens eine teilweise kreisförmige Öffnung aufweisen.

8. Tragstange für Kleidungsstücke nach einem oder mehreren der vorhergehenden Ansprüche, **dadurch gekennzeichnet, dass** der Querschnitt des Rohrgehäuses (2) ein auf den Kopf gestelltes Dreieck mit abgerundetem Scheitel und passend umgebogener Grundfläche darstellt.

9. Tragstange für Kleidungsstücke nach einem oder mehreren der vorhergehenden Ansprüche, **dadurch gekennzeichnet, dass** auf das Rohrgestänge (7) zur Verriegelung von Kleidungsstücke tragenden Kleiderbügeln (8) ein Verankerungselement (9) gleitend aufgesetzt ist, welches sich an dem Rohrgehäuse (2) in der Schließstellung des Rohres verankert.

10. Tragstange für Kleidungsstücke nach einem oder mehreren der vorhergehenden Ansprüche, **dadurch gekennzeichnet, dass** jede Endkappe (10, 11) einen Endbund (18) und ein Endstück (19) zur Einpassung in das Rohrgehäuse umfasst, wobei das Endstück mit einem zentralen Loch (20) zur Führung des entsprechenden Hakens und außen mit Stegen (21) zum Zentrieren des Rohrgehäuses versehen ist und außerdem zwei Laschen (22) besitzt, welche die Female-Komponente der Scharnierverbindung mit dem Gestänge (7) zum Blockieren der Kleiderbügel bilden und seitlich aus der Endbund (18) heraustreten.

11. Tragstange für Kleidungsstücke nach einem oder mehreren der vorhergehenden Ansprüche, **dadurch gekennzeichnet, dass** jeder zur Lagerung des Rohrgestänges (7) vorgesehene Endhebel (15) einen Endbund (23) und ein Endstück (24) zur Einpassung des Gestänges umfasst, während ein Arm (25) in Bezug auf den äußeren Endbund (23) seitlich herausragt, wobei dieser Arm (25) an seinem dem Bund (23) gegenüberliegenden Ende mit einem sich verjüngenden Lagerzapfen (26) versehen ist, welcher mit den Laschen (22) einer entsprechenden Kappe in Eingriff kommt, um so das Drehscharnier des Gestänges zu bilden.

12. Tragstange für Kleidungsstücke nach einem oder mehreren der vorhergehenden Ansprüche, **dadurch gekennzeichnet**, das das Verankerungselement (9) auf dem Gestänge (7) zum Blockieren der Kleiderbügel einen Nabenflansch (31) umfasst, welche mit einem Finger (32) versehen ist mit einem hakenförmigen Profil, welches so angepasst ist, dass es sich bei der Verankerung auf dem Rohrgestänge (2) in der Schließstellung des Gestänges leicht verformt.

13. Tragstange für Kleidungsstücke nach einem oder mehreren der vorhergehenden Ansprüche, **dadurch gekennzeichnet, dass** bei maximal geöffneter Stellung des Gestänges (7) eine Arretierungsfläche (27) des Arms (25) des Hebels (15) gegen einen auf dem Korpus der entsprechenden Kappe gebildeten Anschlag (28) zur Anlage kommt.

## Claims

1. Garment rail (1) for a vehicle body structure, designed to be hung by its ends in holes (6) provided on fittings (5) attached to the internal surfaces of the vertical walls of the transporting vehicle body structures, and equipped with a tubular bar (7) for locking garment rails (8), the garment rail comprising a tubular body (2) featuring mutually opposed C-shaped hooks (3, 4) at its ends, each hook (3, 4) possessing a tail (12, 13) which penetrates the tubular body (2), at least one (3) of the hooks (3, 4) sliding longitudinally with respect to the body (2) so as to permit the hooking action and to adapt the length of the rail to the dimensions of the vehicle body structure, **characterised in that** attached to the two ends of said tubular body (2) are two plastics covers (10, 11) assembled onto said tubular body and used to retain and guide the tails (12, 13) of the hooks (3, 4), the two covers (10, 11) forming a pivot (14) for levers (15) which support said tubular bar (7) for locking garment rails (8).

2. Garment rail according to claim 1, **characterised in that** the sliding hook (3) is engaged with an antagonistic spring (16) positioned so as to be able to move within the internal space of the tubular body (2) and acting on the tail (12) of said sliding hook (3) and on one internal end wall of the corresponding cover (10).

3. Garment rail according to either of the preceding claims, **characterised in that** the fixed hook (4) is locked by the concealed arrangement with fins (17) which is realised between the corresponding tail (13) and the body of the corresponding cover (11).

4. Garment rail according to any of the preceding claims, **characterised in that** the end covers (10, 11) are held in the tubular body (2) by at least one internal shoulder (29) formed on the tubular body (3), which penetrates a corresponding recess (30) provided on each cover.

5. Garment rail according to one or more of the preceding claims, **characterised in that** the hooks (3, 4) are adapted to be attached in substantially lozenge-shaped holes (6) with slightly indented edges.

6. Garment rail according to claim 5, **characterised in that** when fastened in position, each hook (3, 4) is engaged with two consecutive holes (6), resting on the bottom of a first hole and on the upper wall of the subjacent hole.

7. Garment rail according to claim 5, **characterised in that** the holes (6) exhibit at least one partially circular opening.

8. Garment rail according to one or more of the preceding claims, **characterised in that** the cross-section of the tubular body (2) is substantially an inverted isosceles triangle with a rounded apex and suitably curved base.

9. Garment rail according to one or more of the preceding claims, **characterised in that** slidingly attached onto the tubular bar (7) for locking the garment rails (8) is an anchoring element (9) which anchors itself to the tubular body (2) in the closure position of said bar.

10. Garment rail according to one or more of the preceding claims, **characterised in that** each end cover (10, 11) comprises an end liner (18) and a tail (19) for nesting in the tubular body (2), said tail being provided with a central hole (20) for guiding the respective hook and being provided externally with fins (21) for centring said tubular body, and furthermore comprises two lugs (22) which make up the female constituent of the hinged connection with the rail locking bar (7) and which protrude laterally from said end liner (18).

11. Garment rail according to one or more of the preceding claims, **characterised in that** each end lever (15) provided to support the tubular bar (7) comprises an end liner (23) and a tail (24) for nesting in said bar, while an arm (25) protrudes laterally with respect to said end liner (23), said arm (25) being provided, at the end situated opposite the liner (23), with a bevelled journal (26) which engages with the lugs (22) of a corresponding cover so as to produce the rotary hinge of said bar.

12. Garment rail according to one or more of the preceding claims, **characterised in that** the anchoring element (9) to the rail locking bar (7) features a hub (31) equipped with a finger (32) of hook-shaped profile adapted to be deformed slightly by anchoring itself onto the tubular body (2), in the closure position of said bar.

13. Garment rail according to one or more of the preceding claims, **characterised in that** when the bar (7) is opened out to its maximum, a stop surface (27) on the arm (25) of said lever (15) comes up against a limit stop (28) formed on the body of the corresponding cover.
